# DEMANDE DE BREVET EUROPEEN

(11) **EP 1 041 498 A1**
(43) Date de publication de la demande: **04.10.2000**
(21) Numéro de dépôt: 00400870.2
(22) Date de dépôt: 30.03.2000
(51) Int. Cl.: G06F 17/30

(54) **Procédé de mise en oeuvre d'une arborescence d'objets distribués**

(30) Priorité: 01.04.1999 FR 9904072
(71) Demandeur: ALCATEL, 75008 Paris (FR)
(72) Inventeur: Banctel, Fabrice, 91190 Gif-sur-Yvette (FR); Pietre, Armel, 75015 Paris (FR)
(74) Mandataire: Lamoureux, Bernard

(57) **Abrégé**

Un procédé de mise en oeuvre d'une arborescence d'objets distribués dans différents processus, avec comme racine de l'arborescence, un répertoire central Pr0 apte à mémoriser des informations sur des objets dans une structure de données Tab0 est tel que pour chaque objet fils B, un objet parent A dans un processus contient une information correspondant à une adresse physique pB si l'objet fils est contenu dans ledit processus, et une information renvoyant au dit répertoire central, si l'objet fils n'est pas contenu dans le même processus.

## Description

La présente invention concerne un procédé d'organisation hiérarchique d'objets distribués.

Cette invention s'applique à nombre d'applications utilisant un environnement d'objets distribués, comme, à titre d'exemple, les applications de supervision en télécommunication ou transport, les applications constituant un réseau intelligent...

Dans un environnement d'objets distribués, une application peut utiliser différents serveurs, pour fournir des services à des clients.

On appelle processus, un programme qui tourne dans un environnement donné. Un objet de ce processus est une entité logicielle dans ce processus.

Dans une application, les objets distribués sont en pratique organisés selon une arborescence donnée.

Dans cette arborescence, chaque objet à un nom logique, c'est à dire une chaîne de caractères, qui donne le chemin logique d'accès à cet objet depuis l'objet de départ, c'est à dire la racine, de l'arborescence. Ce nom logique est absolu, en ce sens qu'il est déterminé par rapport à la racine.

On peut aussi donner le chemin logique d'accès depuis un objet autre que la racine. On parle alors de nom logique relatif.

Dans tout système d'objets distribués basé sur un ORB, il est souvent nécessaire d'accéder directement à des objets. Pour cela, on doit utiliser les noms logiques, absolus ou relatifs de ces objets, permettant de trouver le chemin logique d'accès jusqu'à l'objet requis.

En outre, il est en général possible de demander directement à un objet parent d'accéder à un objet fils. Dans cette requête à l'objet parent, on utilise alors le nom logique relatif par rapport à cet objet parent pour désigner l'objet fils.

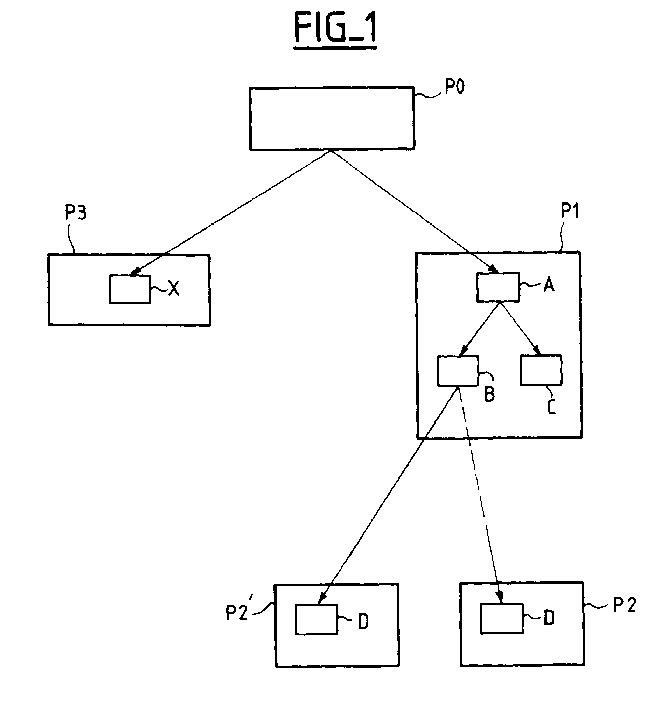

Or, comme les objets sont distribués, l'arborescence des objets comprend en pratique de nombreuses branches, et ces branches ou des parties de ces branches peuvent correspondre à des processus distincts. La figure 1 représente schématiquement un exemple simplifié d'une telle arborescence d'objets.

Sous un processus principal P0, qui constitue la racine de l'arborescence du système, on trouve trois processus distincts P1, P2, P3. Le processus P1 situé directement sous la racine, comprend trois objets, un premier objet A, qui est l'objet d'entrée ou racine du processus, duquel partent deux ramifications vers deux objets B et C. De l'objet B part une dernière ramification vers un objet D du processus P2.

Le processus P3 situé directement sous la racine, comprend un seul objet X.

Dans une mise en oeuvre pratique de l'arborescence du système, ce sont les objets qui contiennent les informations sur leurs fils respectifs. Si ces objets fils sont contenus dans le même processus que l'objet parent, ces informations sont des pointeurs, donnant les adresses physiques de ces objets fils. Si ces objets fils ne sont pas contenus dans le même processus que l'objet parent, ces informations sont des références. Par exemple, l'objet A contient un pointeur sur l'objet B et un pointeur sur l'objet D. L'objet B contient lui une référence sur l'objet D.

Le chemin logique d'accès pour accéder l'objet D depuis la racine, c'est à dire le nom logique absolu, peut s'écrire /A/B/D. Il faut donc passer par l'objet B pour arriver sur l'objet D. Et ce, que l'on accède à l'objet D, en interrogeant directement l'objet B, identifié par le nom logique absolu /A/B, pour l'objet fils identifié dans l'objet B par une référence ou en interrogeant la racine pour l'objet identifié par le nom logique (absolu) /A/B/D.

Or, les objets A et B sont dans le processus P1 et l'objet D est dans un autre processus P2. Si le processus P1 n'est pas en route, ou est en panne, il n'est plus possible selon cette implémentation de l'arborescence d'accéder l'objet D.

En outre, une telle implémentation ne permet pas une gestion aisée de la redondance des processus. Dans l'exemple représenté sur la figure 1, on a ainsi un processus redondant P2', de secours, prévu pour remplacer le processus P2 s'il tombe en panne. Avec la mise en oeuvre de l'arborescence expliquée précédemment, c'est à chaque objet qui reçoit une demande sur un objet qui n'est pas dans son processus, de déterminer sur quel processus P2 ou P2' il va transmettre sa demande. On comprend que cela rend particulièrement complexe la gestion de la redondance. Or les processus redondants sont couramment utilisés pour renforcer les points faibles d'un système c'est à dire, les processus qui sont soit susceptibles de tomber souvent en panne, soit dont la panne paralyse l'ensemble du système ou simplement réduit la qualité du service.

Pour ces raisons, une autre implémentation de l'arborescence des objets d'un système d'objets distribués a été proposée, pour permettre l'accès à tous les objets du système, même si certains objets parents sont indisponibles (processus en panne ou arrêté) et pour simplifier la gestion de la redondance de processus. Dans cette implémentation, on a une gestion centralisée de l'arborescence au niveau de la racine, par un répertoire central, qui contient tous les noms structurés de tous les objets. En d'autres termes, il contient toute l'arborescence du système.

Dans cette implémentation, si on interroge un objet parent pour un objet fils, l'appel est redirigé vers le répertoire central. On peut alors toujours accéder à un objet même si dans l'arborescence, cet objet dépend en filiation d'autres processus qui sont arrêtés. En outre la gestion de la redondance se trouve elle aussi centralisée, gérée par ce même répertoire central.

Cependant, cette implémentation est très coûteuse en termes de ressources : si le nombre d'objets est important, le répertoire central peut-être surchargé et les performances du système sérieusement dégradées, du fait du temps nécessaire pour consulter l'arborescence dans le répertoire central pour chaque appel.

En outre, cette solution ne prend plus en compte la spécificité de l'environnement distribué, puisqu'elle traite chaque objet de manière identique. Tous les appels sont traités par le répertoire central, même si l'appel concerne un objet fils d'un objet parent situé dans le même processus. Ceci augmente inutilement le volume de communication inter processus.

Enfin, si le système utilise comme protocole de communication entre objets, le protocole objet-objet, basé sur la création de paires d'éléments représentants, comme par exemple les paires proxy/stub dans les environnements distribués basés sur l'ORB DCOM, la solution à répertoire centralisé multiplie ces paires, puisqu'elle implique la création d'une paire d'éléments représentants pour chaque objet de l'arborescence. Or ces paires d'éléments représentants sont très coûteuses en termes de ressources mémoire.

Ainsi, l'invention a pour objet un procédé de mise en oeuvre d'une arborescence d'objets distribués qui ne présentent pas les inconvénients précités.

Selon l'invention, on utilise un répertoire central qui ne contient des informations d'arborescences que sur certains objets ciblés, en sorte que tout objet d'un processus puisse être accédé.

Selon l'invention, lorsqu'un objet parent reçoit une demande de localisation d'un objet fils, il accède à l'objet fils, si ce dernier est dans le même processus, ou il retourne l'appel vers le répertoire central, s'il n'est pas dans le même processus.

En d'autres termes, l'arborescence à l'intérieur d'un même processus, est gérée en interne dans ce processus, les objets de ce processus contenant les pointeurs nécessaires sur les objets fils contenus dans ce processus, c'est à dire les adresses physiques de ces objets dans le processus considéré, mais l'arborescence des processus est gérée par le répertoire central. Cela permet avantageusement d'accéder à des objets de processus fils même si un processus parent est arrêté; cela permet de gérer les problèmes de redondance au niveau du répertoire central; enfin, cela permet d'optimiser le temps de réponse du répertoire central qui n'a qu'une arborescence partielle à gérer et d'optimiser les ressources mémoires nécessaires pour implémenter cette arborescence.

Telle que caractérisée, l'invention concerne donc un procédé qui comporte une étape consistant à assigner pour chaque objet fils, à un objet parent dans un processus
- une information correspondant à une adresse physique si l'objet fils est contenu dans ce processus, et
- une information renvoyant au dit répertoire central, si l'objet fils n'est pas contenu dans le même processus.

D'autres caractéristiques et avantages de l'invention sont décrits dans la description suivante, faite à titre indicatif et nullement limitatif et en référence aux dessins annexés dans lesquels :
- la figure 1 déjà décrite représente un schéma simplifié d'implémentation d'une arborescence d'objets distribués selon l'état de la technique; et
- la figure 2 représente un schéma d'une implémentation d'une arborescence d'objets distribués selon l'invention.

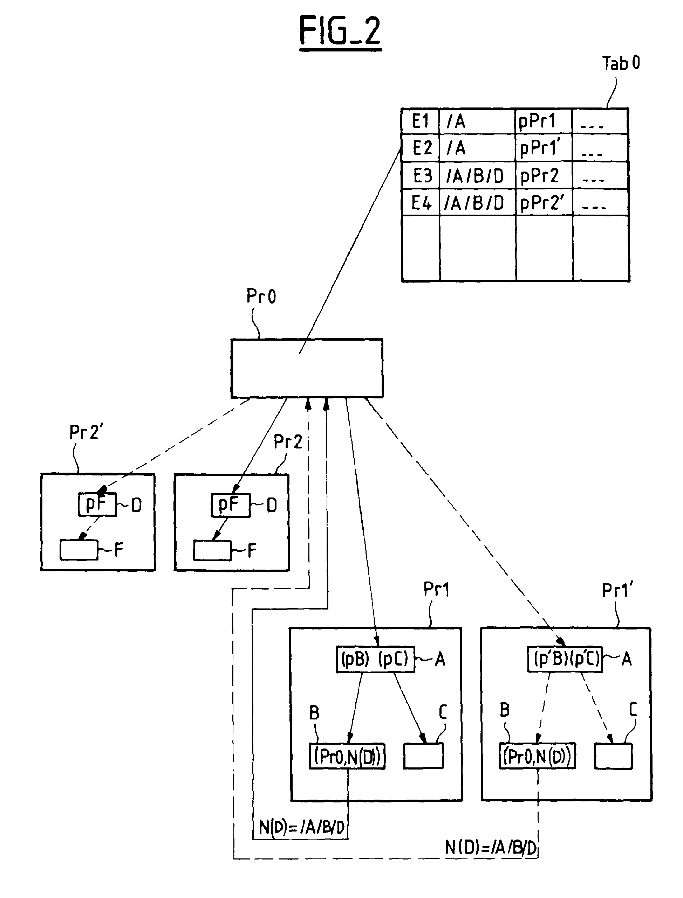

Selon l'invention, un répertoire central est prévu, correspondant au processus Pr0 sur la figure 2. Ce processus est la racine de l'arborescence.

Sous le processus racine Pr0, on trouve différents processus.

Un premier processus Pr1 contient trois objets A, B et C. Dans ce processus, l'objet A est l'objet racine. On appelle objet racine d'un processus, un objet d'entrée de ce processus. On remarquera qu'il peut y en avoir plusieurs dans un même processus.

Les objets B et C sont deux objets fils respectifs de l'objet A.

Un processus redondant Pr1' est la réplique de ce premier processus. Notamment, il contient les mêmes objets selon la même arborescence.

Un deuxième processus Pr2 contient deux objets D et F. Dans ce processus, l'objet D est la racine et l'objet F un objet fils de l'objet D. L'objet D est en outre objet fils de l'objet B du processus Pr1.

Un processus redondant Pr2' est la réplique de ce deuxième processus. Notamment, il contient les mêmes objets selon la même arborescence.

Le répertoire central contient une structure de données Tab0, dans laquelle il mémorise des informations relatives à l'arborescence du système.

En pratique il contient au moins toutes les informations relatives aux objets d'entrée, ou racine de chaque processus distinct de l'arborescence.

Dans l'exemple, à l'entrée E1 de la structure de données, on a des informations relatives à l'objet A du processus Pr1: nom logique par rapport au répertoire central /A, pointeur pPr1sur le processus correspondant Pr1, et d'autres informations nécessaires à sa gestion.

A l'entrée E2, il trouve les informations concernant l'objet A du processus redondant Pr1'; à l'entrée E3, celles sur l'objet D du processus Pr2 ; à l'entrée E4, celles sur l'objet D du processus Pr2'.

Ainsi, le répertoire central contient l'arborescence des processus dans le système.

Selon l'invention, un objet parent dans un processus (autre que le répertoire central) contient des informations sur ses objets fils qui sont des pointeurs, c'est à dire leur adresse physique, s'ils sont contenus dans le même processus. Ainsi, l'objet A contient un pointeur pB, respectivement pC sur l'objet fils B, respectivement C.

Dans le cas où l'objet fils n'est pas dans le même processus, l'objet parent contient une information pour retourner l'appel au répertoire central. Ainsi, si l'objet B reçoit une demande pour l'objet fils D identifié par son nom logique /D relatif par rapport à l'objet B, ce dernier renvoie la demande sur le répertoire central.

En pratique, il renvoie cette demande en plaçant la chaîne de caractères de son propre nom logique absolu, par rapport au répertoire central, devant la chaîne de caractères du nom logique relatif de l'objet D. Dans l'exemple, le nom logique absolu de l'objet B est égal à la chaîne de caractères /A/B. Ainsi, l'objet B transmet la demande au répertoire central en lui fournissant le nom logique absolu N(D)=/A/B/D de l'objet D.

Lorsque le répertoire central reçoit une demande sur un objet identifié par son nom logique par rapport au répertoire central, il consulte sa structure de données interne, de type dictionnaire, dans laquelle il recherche la chaîne de caractères correspondante. Si il la trouve, il obtient une référence correspondante de l'objet dans le système. Cette référence lui permet de transmettre la demande directement sur cet objet. S'il ne la trouve pas, il recherche la chaîne de caractères la plus grande possible correspondant à une première partie de la chaîne de caractères, afin de transmettre la demande sur un objet parent pour l'objet donné identifié par son nom relatif par rapport à cet objet parent. Ce nom relatif est obtenu par la différence entre les deux chaînes de caractères. Prenons l'exemple d'une demande reçue par le répertoire pour l'objet C défini par son nom logique N(C)=/A/C.

Le répertoire central recherche dans sa structure de données cette chaîne ou une chaîne la plus grande possible correspondant à la première partie (c'est à dire le début de cette chaîne). Dans l'exemple, il va trouver la chaîne /A, qui est le nom logique de l'objet A.

Il transmet donc la demande sur l'objet C à l'objet A, en lui passant comme identifiant le nom logique relatif de l'objet C par rapport à cet objet A. Ce nom logique relatif est obtenu simplement par la différence entre les deux chaînes de caractères : /A/C - /A = /C.

Dans l'invention, on prévoit que si l'objet sur lequel le répertoire a transmis une demande sur un objet fils, ne trouve pas ce dernier dans son processus, il envoie un message au répertoire central, qui va rechercher un autre objet dans son répertoire. Il peut aussi mettre une information correspondante dans sa structure de données.

En ce qui concerne la gestion de la redondance, on voit sur la figure 2, que la structure de donnée Tab0 contient tous les objets de mêmes noms logiques correspondants à des processus différents. A chaque entrée dans la table, correspond une identification physique du processus correspondant. Ainsi, à l'entrée E1, on trouve le nom /A pour un processus identifié par un paramètre pPr1, correspondant au processus Pr1. A l'entrée E2, on trouve le nom /A pour un processus identifié par un paramètre pPr1', correspondant au processus redondant Pr1'.

Comme dans l'invention, dès qu'un objet d'un processus a une demande sur un objet fils d'un autre processus à gérer, il transmet sa demande sur le répertoire central, c'est ce dernier qui assure toute la gestion de la redondance. En d'autres termes, c'est lui qui détermine à un moment donné s'il transmet l'appel sur le processus Pr1 ou sur son processus Pr1' selon des informations sur l'état du système. La gestion de la redondance s'en trouve centralisée.

De préférence, on a vu que le répertoire central contient les informations relatives aux objets d'entrée (racine) de chacun des processus du système. Il contient donc l'arborescence des processus, (y compris la redondance), tandis que l'arborescence dans les processus est implémentée en interne dans chacun de ces processus.

Enfin, on notera que le répertoire central est un point sensible du système. On prévoira donc en pratique des mécanismes de protection ou un répertoire central redondant afin d'obtenir un mécanisme robuste.

On a vu que l'invention s'applique dans un environnement d'objets distribués.

Une application particulière concerne un environnement basé sur un gestionnaire d'objets distribués ORB, acronyme anglo-saxon pour *Object Request Broker.* On peut citer comme ORB connu et utilisés, l'ORB CORBA (*Common Object Request Broker Architecture*) et DCOM (*Distributed Component Object Mode*).

## Revendications

1. Procédé de mise en oeuvre d'une arborescence d'objets distribués dans différents processus, un répertoire central (Pr0) apte à mémoriser des informations sur des objets dans une structure de données (Tab0) étant à la racine de l'arborescence, caractérisé en ce qu'il comporte une étape consistant à assigner pour chaque objet fils (B), à un objet parent (A) dans un processus :
- une information correspondant à une adresse physique (pB) si l'objet fils est contenu dans ledit processus, et
- une information renvoyant au dit répertoire central, si l'objet fils n'est pas contenu dans le même processus.

2. Procédé selon la revendication 1, caractérisé en ce que lorsque le répertoire central (Pr0) reçoit une demande d'accès sur un premier objet (C) identifié par un nom logique identifiant un chemin logique d'accès du dit premier objet depuis le répertoire central (/A/C), il recherche dans sa structure de donnée le nom logique reçu, pour transmettre la demande directement sur le dit objet ou bien, si ce nom logique n'est pas dans son répertoire, il recherche un nom logique (/A) avec chaîne de caractères la plus grande possible égale à une première partie de la chaîne de caractères du nom logique reçu, pour transmettre sur un objet parent ainsi déterminé la demande sur le premier objet, en fournissant au dit objet parent une information (/B) correspondant au chemin logique d'accès du premier objet par rapport à l'objet parent.

3. Procédé selon la revendication 2, caractérisé en ce que l'objet parent qui reçoit ladite demande, transmet la demande sur le dit premier objet, si c'est un objet fils de son processus, ou retourne un message au répertoire central.

4. Procédé selon l'une quelconque des revendications précédentes, caractérisé en ce que le répertoire central assure la gestion de la redondance des processus, par la sélection d'un processus parmi plusieurs possibles contenant l'objet demandé.

5. Procédé selon l'une quelconque des revendications précédentes, caractérisé en ce que lorsqu'un objet parent d'un processus reçoit directement une demande sur un objet fils, il renvoie cette demande sur le répertoire central, si le dit objet fils n'est pas contenu dans son processus.

6. Procédé selon la revendication 5, l'objet fils étant identifié dans ladite demande par un nom logique définissant le chemin logique d'accès de cet objet depuis ledit objet parent, caractérisé en ce que ledit objet parent renvoie ladite demande au répertoire central en faisant précéder la chaîne de caractères de ce nom logique par la chaîne de caractères correspondant à son propre nom logique définissant son chemin logique d'accès depuis le répertoire central.

7. Procédé selon l'une quelconque des revendications précédentes, caractérisé en ce que le répertoire central contient au moins des informations relatives à chaque objet racine de chaque processus.

8. Procédé selon l'une quelconque des revendications précédentes, caractérisé en ce qu'il s'applique à un environnement des objets distribués basé sur un gestionnaire de type CORBA.

9. Procédé selon l'une quelconque des revendications 1 à 7, caractérisé en ce qu'il s'applique à un environnement des objets distribués basé sur un gestionnaire de type DCOM.
